# EUROPEAN PATENT SPECIFICATION

(11) **EP 3 581 820 B1**
(45) Date of publication and mention of the grant of the patent: **03.01.2024**
(21) Application number: 19176671.6
(22) Date of filing: 27.05.2019
(51) Int. Cl.: F16D 3/38

(54) **A FLANGE YOKE**
FLANSCHJOCH
FOURCHE À BRIDE

(30) Priority: 12.06.2018 TR 201808359
(43) Date of publication of application: 18.12.2019
(73) Proprietor: Tirsan Kardan Sanayi Ve Ticaret Anonim Sirketi, Yunusemre - Manisa (TR)
(72) Inventor: DAVAZLI, Sebahattin, Manisa (TR)
(74) Representative: Yamankaradeniz, Kemal

(56) References cited:
- US-A1- 2009 111 589
- US-B2- 6 893 349

## Description

### Technical Field

The invention is about changing the design and improving machinability of connection surface design of flange yoke on the driveshaft which provides the rotational motion and power transmission between differential and transmission in motor vehicles.

The invention is especially about the structure of flange yoke which provides decrease in production time and energy costs as well as increase in the lifespan of cutting tools thanks to the elevated zone formed on connecting bolt seating surfaces during flange yoke production.

### Prior Art

Today the propshaft, which is used as a driveline component on various motor vehicles, transfers the rotational motion, coming from engine to transmission, to the differential. The flange yoke, which allows the propshaft to be connected on the vehicle to operate as needed, is connected from both ends of the propshaft to fix on the vehicle. The bolt faces of the bolts used for connection of flange yoke on the vehicle is machined before drilling the hole by working on the assembly base of the flange yoke. However, the connection surface which is aligned with the assembly base before machining the flange yoke leads to disadvantages of this design while working with cutting tools.

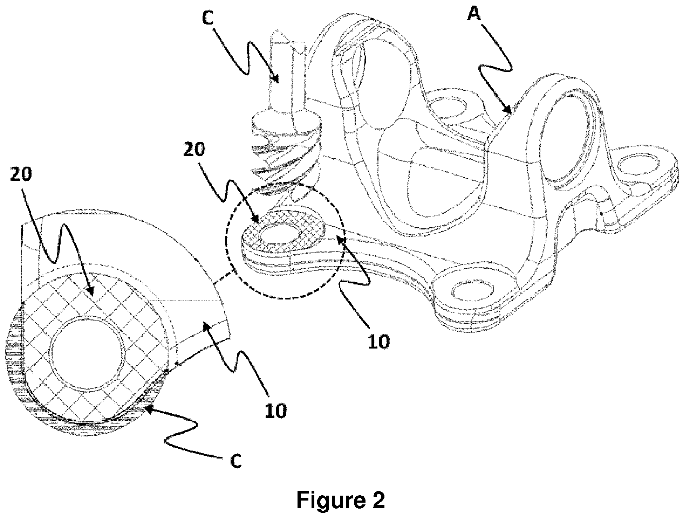

Figure 2 shows perspective and detail view of machined flange yoke (A) with Prior Art. Accordingly, the connection surface (20) on the rough flange yoke (A) in Prior Art is aligned with the assembly base (10), thus material is removed on the assembly base (10) by the cutting tool (C). During this process one part of the cutting tool (C) removes material on the assembly base (10) while the other part remains disengaged. In this case, the cutting tool (C) is exposed to an unbalanced machining load which causes pulsed operation. Unstable load and pulsed operation causes cutting tools (C) to complete their service lives earlier. Besides, the cutting tool (C) is exposed to vibration due to contact with the assembly base (10) during machining which creates breakage risk. The vibration caused by pulsed operation of the cutting tool (C) prevents the connection surface (20) from being machined in desired quality; whereas the flange yoke (A) which does not have the proper surface quality might become scrap as a result of the machining operation.

Due to mentioned pulsed operation, vibrations and unbalanced cutting load, cutting speed of the cutting tool (C) is kept in minimum which leads to extended machining times. This decreases the amount of parts produced in unit of time and increases the amount of cutting fluid used during machining because of the extended machining times. As a result of this, disposal costs of cutting fluid, a chemical waste, increase and production costs per unit directly increase.

US2009111589A1 relates a decoupler assembly for a motor vehicle driveline comprising a decoupler, an input driveably connected to a transmission output shaft and including a first connection that secures the input to the decoupler, and an output driveably connected to a final drive axle then to wheels of the vehicle, including a second connection that secures the output to the decoupler, and a support that provides bending continuity between the input and the output, the support permitting rotation of the input about an axis relative to the output, the decoupler, the first connection and the second connection providing resistance to such rotation. In US2009111589A1, a second fitting includes a flange formed with series of bolt holes angularly spaced about axis, by which fitting or universal joint are secured to fitting.

As a result, due to above defined negative consequences and inadequacy of current solutions required a development in relevant technical field.

### Object of the Invention

The invention is inspired from current situations and aims to resolve above mentioned negative consequences.

Main purpose of the invention is to provide better machinability for the propshaft thanks to the elevated zone formed on the connection surface of the flange yoke where propshaft is mounted.

Another purpose of the invention is to improve the design of flange yoke connection surface to prevent pulsed and vibrated operation of the cutting tools to improve their life and cutting parameters.

Another purpose of the invention is to prevent flange yoke becoming scrap by improving the machined surface quality connection surface.

Another purpose of the invention is to reduce unit part production time by improving cutting tool cutting speed and progression values.

Another purpose of the invention is to reduce machine tools cutting fluid consumption during machining, and reduce cutting fluid disposal costs by improving connection surface design. The invention, intending to realize all above mentioned purposes and aims which shall arise in connection with below detailed explanations, is about the flange yoke which connects the propshaft on the vehicle via connection surfaces formed by machining its assembly bases. The invention is characterized by comprising positive raised zones from mentioned assembly bases.

The structural features and characteristics of the invention as well as all its advantages might be better understood with below given figures and the detailed explanation referring to these figures; therefore, evaluation should be performed considering these figures and detailed explanations.

### Brief Description of the Figures

**Figure 1****,** perspective view of rough flange yoke which is the subject of the invention.
**Figure 2****,** shows perspective view of machined flange yoke with Prior Art.
**Figure 3****,** flange yoke which is the subject of the invention with Prior Art and its comparative view with new design before machining.
**Figure 4****,** view of the flange yoke which is the subject of the invention with Prior Art and its comparative view new design following machining.
**Figure 5****,** view of the flange yoke which is the subject of the invention assembled on the propshaft.

Drawings should not necessarily be scaled and details which are not required to understand the invention might be neglected. Besides, components which are at least identical to a large extent or which have at least functions to a large extent are indicated with the same number.

### Description of Part References

A. Flange yoke
   10. Assembly base
   20. Connection surface
   21. Raised zone
B. Propshaft
C. Cutting tools

### Detailed Description of the Invention

In this detailed explanation, preferred construction of the flange yoke (A) is explained to better understand the subject in a manner not constituting any limiting impact.

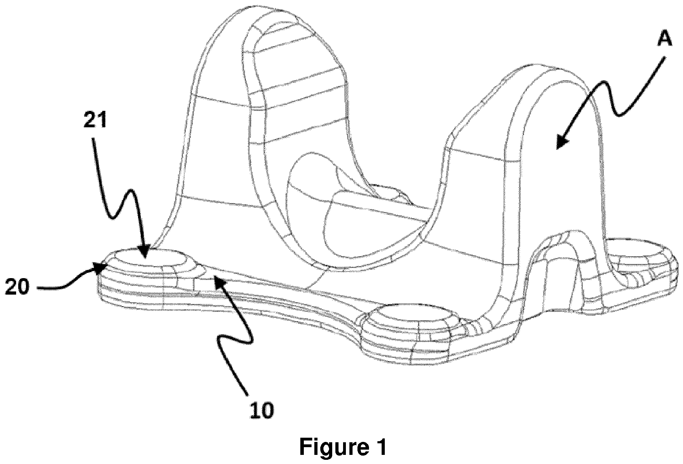

Figure 1 shows perspective view of rough flange yoke (A) which is the subject of the invention. According to the invention with its most basic features; removal of material from the connection surface (20) formed by machining on the assembly base (10) and used for connection of the flange yoke (A) on the vehicle following its assembly on the propshaft (B), is performed by cutting tools (C). There is an raised zone (21) above the assembly base (10) surface where connection surface (20) of the rough flange yoke (A) is located. Thus, balanced material removal can be performed from the connection surface (20) of the cutting tool (C) which allows machining to the final dimension.

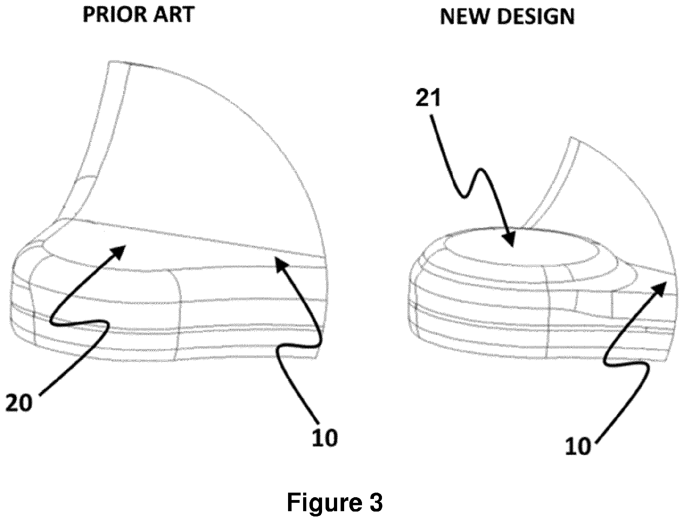

Figure 3, shows flange yoke (A) which is the subject of the invention with Prior Art and its comparative view with new design before machining. Accordingly, since in the Prior Art assembly base (10) and connection surface (20) are aligned before machining, cutting tool (C) is exposed to pulses and vibration while machining the connection surface (20). On the other hand, in new design of the flange yoke (A) thickness of the assembly base (10) is decreased, connection surface (20) is kept high, and raised zone (21) is formed. Thus, material weight of flange yoke (A) is indirectly decreased and raw material cost is improved. Besides, since total material weight of the flange yoke (A) manufactured by forging method shall decrease, the amount of material to be heated prior to forging shall also decrease leading to savings in operating time and energy costs of the furnace. The decrease in raw part weights increases the number of flange yokes (A) in a delivery batch. All mentioned improvements provides reduction in unit part costs.

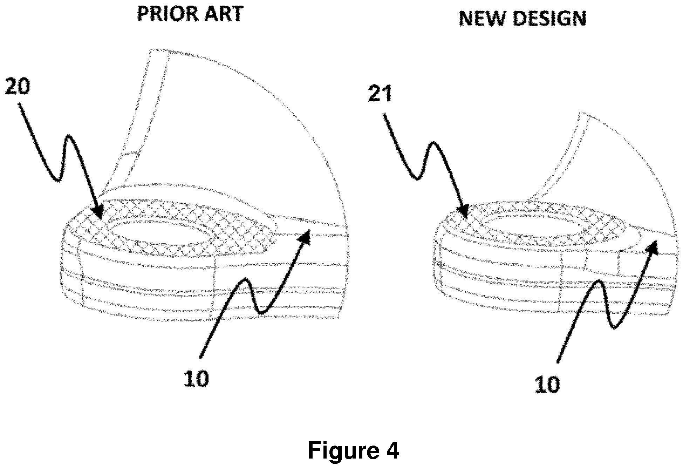

Figure 4, shows flange yoke (A) which is the subject of the invention with Prior Art and its comparative view with machined new design. Accordingly, pulses and vibrations to be exposed by cutting tools (C) while machining the raised zone (21) shall be prevented allowing balanced material removal from the connection surface (20).

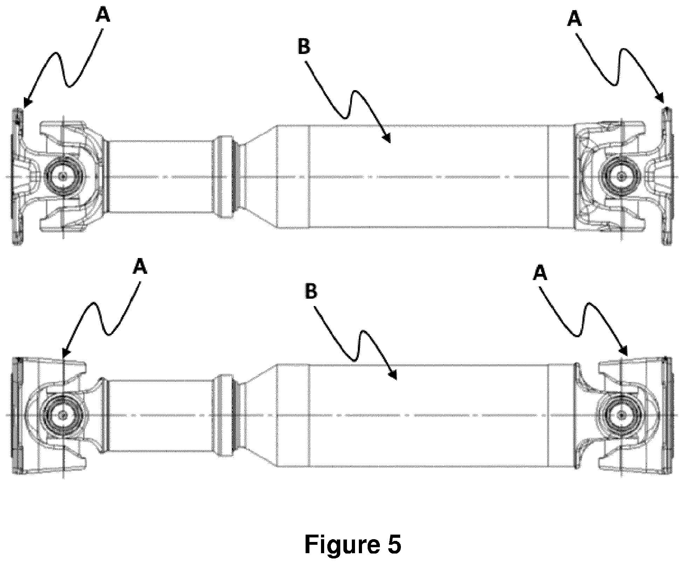

Figure 5, shows view of the flange yoke (A) which is the subject of the invention assembled on the propshaft. Accordingly, the propshaft (B) assembled on the flange yoke (A) from both ends is connected to the vehicle from four connection surfaced on the flange yoke (20) by bolts and thus transfers the rotational motion it receives from the transmission to the differential.

## Claims

1. The flange yoke (A) for attaching the propshaft (B), which provides the rotational motion and power transmission between differential and transmission in motor vehicles, to the vehicle,
wherein the flange yoke (A) comprises an assembly base (10), connection surfaces and raised zones (21),
wherein the flange yoke (A) is attached via the connection surfaces (20),
and **characterized by**
• the raised zone (21) is located on the assembly base (10),
• surface of the raised zone (21) is higher than surface of the assembly base (10),
• the raised zone (21) is formed by decreasing thickness of the assembly base (10),
• removal of material from the connection surface (20) is formed by cutting tools (C) on the assembly base (10), wherein
the raised zone (21) allows balanced material removal from the connection surface (20) as connection surface (20) is kept high.

## Patentansprüche

1. Flanschmitnehmer (A) zum Befestigen der Kardanwelle (B), die die Drehbewegung und Kraftübertragung zwischen Differenzial und Getriebe in Kraftfahrzeugen bereitstellt, an dem Fahrzeug,
wobei der Flanschmitnehmer (A) eine Montagebasis (10), Verbindungsoberflächen und erhabene Zonen (21) umfasst,
wobei der Flanschmitnehmer (A) über die Verbindungsoberflächen (20) befestigt wird,
und **dadurch gekennzeichnet, dass**:
• die erhabene Zone (21) sich an der Montagebasis (10) befindet,
• die Oberfläche der erhabenen Zone (21) höher als die Oberfläche der Montagebasis (10) ist,
• die erhabene Zone (21) durch Verringern der Dicke der Montagebasis (10) ausgebildet wird,
• ein Materialabtrag von der Verbindungsoberfläche (20) durch Schneidwerkzeuge (C) an der Montagebasis (10) ausgebildet wird, wobei
die erhabene Zone (21) einen gleichmäßigen Materialabtrag von der Verbindungsoberfläche (20) ermöglicht, da die Verbindungsoberfläche (20) hoch gehalten wird.

## Revendications

1. Étrier à bride (A) pour fixer l'arbre de transmission (B), qui délivre le mouvement de rotation et la transmission de puissance entre différentiel et transmission dans les véhicules motorisés, au véhicule,
dans lequel l'étrier à bride (A) comprend un socle d'assemblage (10), des surfaces de raccordement et des zones surélevées (21),
dans lequel l'étrier à bride (A) est fixé via les surfaces de raccordement (20),
et **caractérisé par** :
• la zone surélevée (21) est située sur le socle d'assemblage (10),
• la surface de la zone surélevée (21) est plus haute que la surface du socle d'assemblage (10),
• la zone surélevée (21) est formée en diminuant l'épaisseur du socle d'assemblage (10),
• le retrait de matière de la surface de raccordement (20) est réalisé au moyen d'outils de coupe (C) sur le socle d'assemblage (10), dans lequel
la zone surélevée (21) permet un retrait de matière équilibré depuis la surface de raccordement (20) car la surface de raccordement (20) est maintenue en hauteur.
